Europäisches Patentamt

(19) European Patent Office

Office européen des brevets

(11) Publication number: **0 109 114**
**B1**

## (12) EUROPEAN PATENT SPECIFICATION

(45) Date of publication of patent specification: **30.07.86**

(51) Int. Cl.⁴: **B 63 B 27/22, B 65 G 65/06**

(21) Application number: **83201536.6**

(22) Date of filing: **25.10.83**

(54) Self-unloading vessel.

(30) Priority: **28.10.82 NL 8204171**

(43) Date of publication of application:
**23.05.84 Bulletin 84/21**

(45) Publication of the grant of the patent:
**30.07.86 Bulletin 86/31**

(84) Designated Contracting States:
**AT BE CH DE FR GB IT LI LU NL SE**

(56) References cited:
**WO-A-82/00276**
**DE-A-2 144 865**
**DE-C- 112 412**
**FR-A- 535 364**
**NL-A-7 316 877**
**NL-A-7 706 664**
**US-A-1 585 268**
**US-A-1 737 343**
**US-A-3 144 142**
**US-A-3 847 290**

(73) Proprietor: **FRANS SWARTTOUW B.V.**
**Van Riemsdijkweg 78 P.O. Box 54143**
**NL-3008 JC Rotterdam (NL)**

(72) Inventor: **van Deijk, Jan Dirk Albert**
**Kempenaar 82**
**NL-2991 PJ Barendrecht (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention relates to a self-loading vessel for bulk cargo comprising a deck over the cargo storing hold, said deck having hatchways to be closed by covers, a conveyor extending in the longitudinal direction of the vessel, a bridge movable on rails in the longitudinal direction of the vessel, at least one excavator suspended from said bridge, and a transverse gutter conveyor mounted to said bridge to lead the excavated bulk material to the longitudinal conveyor, said bridge with excavator as well as said longitudinal conveyor being entirely supported underneath said deck.

Such a vessel is disclosed in US—A—1 737 343. Self-unloading vessels are especially used for the transport of bulk material to locations where there are no unloading provisions like grab cranes ashore. It is of importance that the hold as well as the unloading equipment is covered by the deck as during unloading the polution of the environment is drastically limited.

The longitudinal conveyor of the vessel disclosed in said US specification has a position near the lower side of the hold of the ship. Consequently at the discharge end of the longitudinal conveyor, the bulk material must be elevated over a considerable height. The inclined belt conveyor for this purpose is relatively long and extends from the bottom of the hold; this inclined conveyor therefore takes a rather big volume of the hold. Another disadvantage is that the floor plate on which the bulk material is supported in the vessel, takes a higher position than the bottom of the hold on which the longitudinal conveyor is supported. As a consequence the loss of storage capacity is rather high.

It is an object of the invention to avoid this disadvantage and to provide a self-unloading vessel indicated in the preamble, of which by an adequate locating of the longitudinal conveyor and bridge, the loss of storage capacity is considerably limited.

Therefore according to the invention the longitudinal conveyor has been mounted on a support at such a level that it takes a position in the upper part of the hold, and the bridge being mounted at a short distance below the deck.

An efficient and substantially complete unloading of the vessel without any essential loss of storage capacity can be obtained if according to a preferred embodiment the longitudinal conveyor is mounted on a partition wall approximately in the middle of the hold between excavators suspended from the common bridge.

To obtain that one single transverse conveyor suffices for both excavators, the transverse conveyor for both excavators is one single chain conveyor having carriers, the upper part of said chain conveyor at the location of one excavator lies immediately above a gutter bottom, whereas the upper part at the location of the other excavator lets the bulk material pass to a gutter bottom above which the lower part of the chain conveyor runs.

DE—A—2 144 865 discloses a self-unloading vessel comprising a deck over the cargo storing hold, said deck having hatchways to be closed by covers, a conveyor extending in the longitudinal direction of the vessel, a bridge movable on rails in the longitudinal direction of the vessel. The longituninal conveyor is mounted on a support at such a level that it takes a position in the upper part of the hold. The bridge is mounted above the deck and a grab crane is movable on the bridge in the transverse direction. This known vessel does not have the advantage that spreading of dust is prevented. Further the bridge with grab crane above the deck and the longitudinal conveyor underneath the deck are not favourable for an efficient unloading of the vessel.

The invention will now be elucidated with the aid of the drawings in which an embodiment is shown.

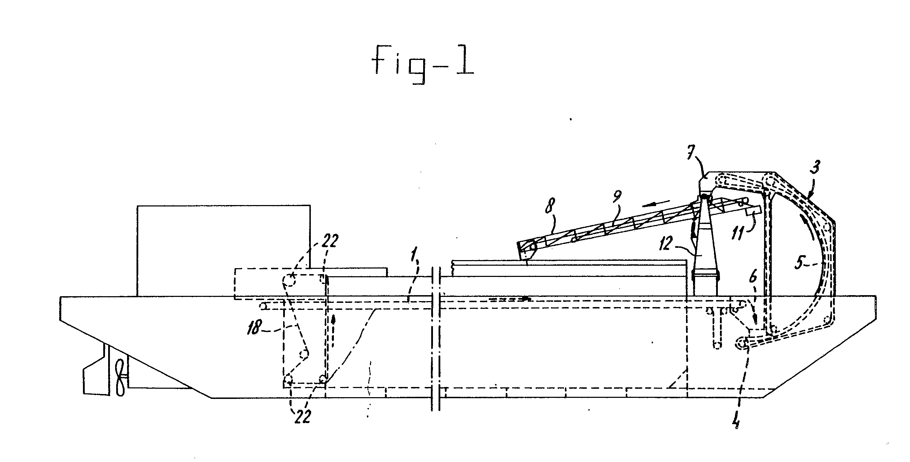

Figure 1 shows a side view of a self-unloading vessel, the provisions according to the invention being indicated in dotted lines.

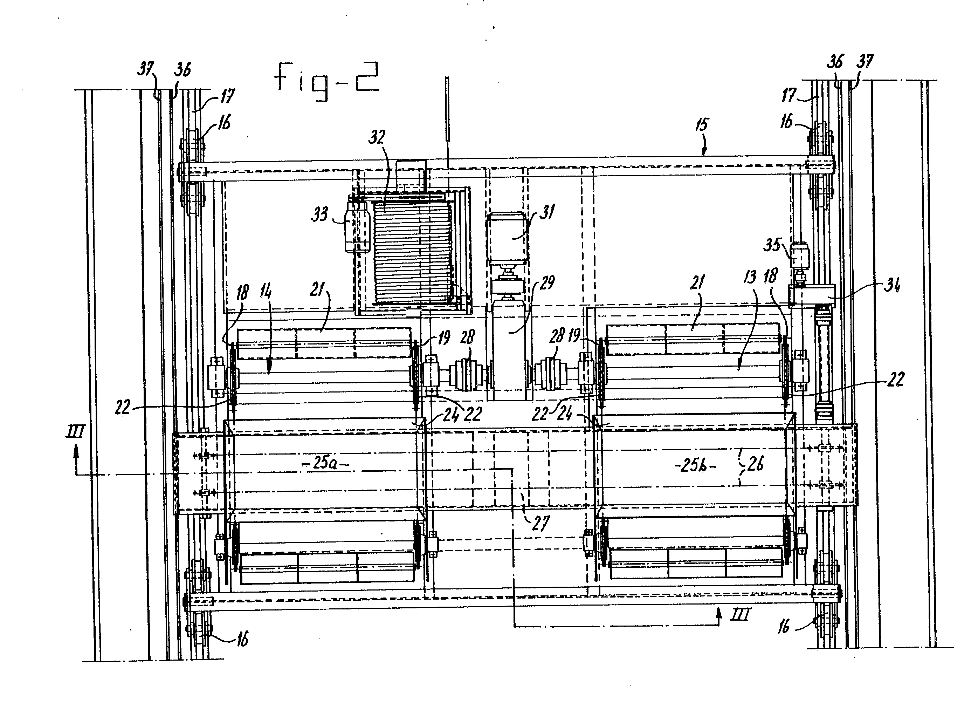

Figure 2 shows a plan view of the excavator mounted in the hold of the vessel.

Figure 3 shows a cross-section according to the line III—III in figure 2.

Figure 4 shows a side view of the excavator.

A longitudinal conveyor 1 is mounted on a closed support wall 2 in the hold of the shown self-unloading vessel. This longitudinal conveyor is an endless conveyor belt of which the upper part has got the shape of a trough by means of rollers. The upstanding parts of the trough extend at an angle of about 45°.

An elevating conveyor 3 of known construction is mounted adjacent the front end of the vessel. This conveyor consists of a flat carrier belt 4 having side and cross partitions and a flat clamping belt 5. The co-operating parts of the conveyor 3 being clamped on each other, runs according to a circle arc.

A transfer portion 6 is present between the discharge end of the central longitudinal conveyor 1 and the receiving end of the elevating conveyor 3.

A transfer portion 7 is present between the discharge end of the elevating conveyor 3 and a discharge conveyor 9 mounted on a swivelling arm 8. The swivelling arm is balanced by a weight 11. Swivelling may take place around a vertical as well as a horizontal axis with respect to a support column 12.

To feed the bulk material stored in the hold of the vessel on the central longitudinal conveyor 1, use is made of two excavators 13, 14 secured to a bridge construction 15 symmetrically at both sides of the closed support wall 2. The bridge construction 15 is movable by wheel sets 16 on rails 17. The combination of both excavators is able to dig over the entire width of the hold.

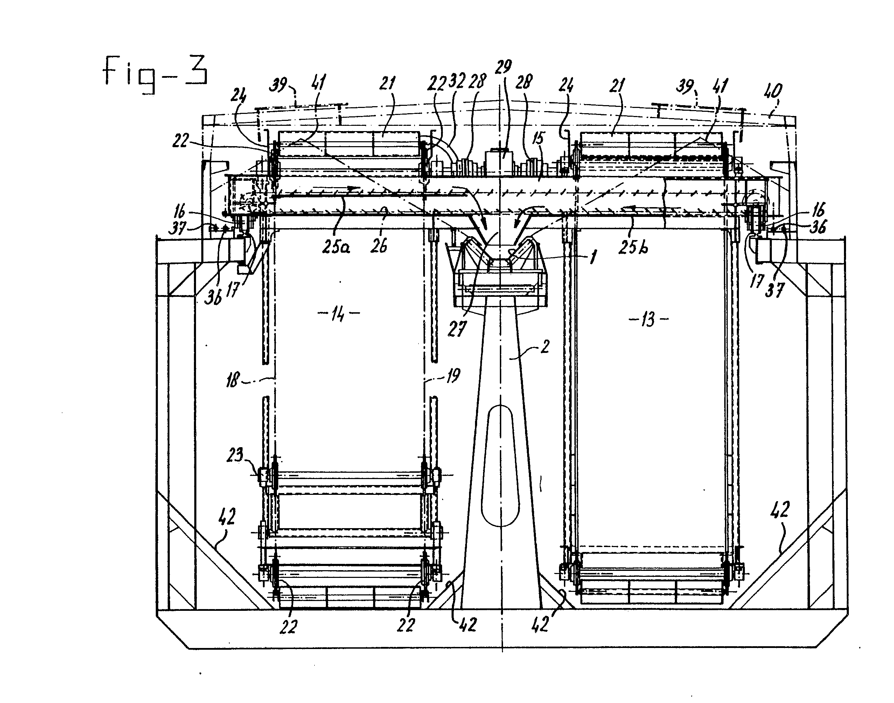

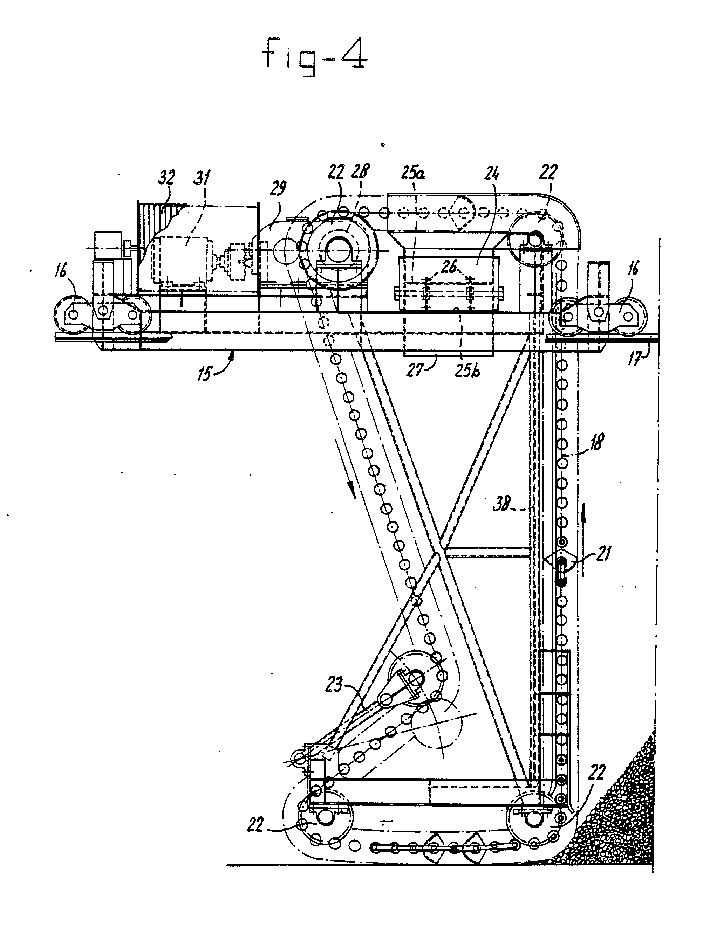

Each of the excavators comprises two chains 18, 19 between which buckets 21 are mounted. The chains are guided by sprockets 22 along an endless path having a substantially horizontal digging part in which the buckets supported by the sagging chains run over the bottom of the hold to the lower part of the slope (figure 4), a vertical elevating part, a horizontal discharge part in which the buckets turned upside down discharge the load, and a return part in which the chains are spanned by a span arm 23.

The buckets have for instance a length of 2,35 meter and a contents of 140 liter.

The buckets discharge the bulk material through a chute 24 on a gutter 25a, 25b respectively in which a transverse chain conveyor 26 runs said conveyor having carriers.

The gutter 25a extends at the side of the elevator 14 approximately at the level of the upper part of the chain conveyor 26, whereas the gutter 25b extends at the side of the elevator 13 approximately at the level of the lower part of the chain conveyor 26 indicated by arrows in figure 3, is such that the material on both gutter parts 25a, 25b is transported in the direction of the central chute debouching above the central longitudinal conveyor 1. This means that only one single transverse chain conveyor for both excavators 13, 14 suffices. The gutters 25a, 25b have for instance a width of 1 meter.

The excavators 13, 14 are driven through couplings 28 and a gearbox 29 by a motor receiving electric power from a cable 32 wound on a drum. To keep the cable tightened on the drum, a motor 33 is present.

The transverse chain conveyor 26 with carriers is driven through transmissions 34 by a motor 35.

The bridge construction 15 with the excavators 13, 14 may be moved in two directions by cables 36, 37. The cables are wound on a non-shown winch drum at one end of the vessel and run over a disc at the other end of the vessel. The direction of winding of the cable 36 is opposite to the direction of winding of the cables 37 which means that the winding from the drum of cables 36 is carried out simultaneously with the winding on the drum of cables 37 and reverse.

A frame plate 38 is disposed at the rear side of the upwards moving part of the excavators. In the parking position of the bridge construction 15 this plate is flush with plates in the rear part of the hold, so that during the loading of the ship no bulk material may land near the downwards moving part of the excavators.

Essential for the invention is that the entire bridge construction with excavators is mounted under the permanent deck 40. The loading takes place through hatchways usually closed by covers 41.

The upper limit of the load is indicated by dotted lines 41.

At the start of the unloading of the vessel the bridge construction 14 is moved rearwards somewhat to disturb the bulk material packed against the buckets of the upwards going part and the frame plate mounted behind this part. After having formed a slope, the bridge construction with the excavators in operation is pulled forwards Slowly. The velociaty amounts for instance 20 meters an hour. In order to remove the bulk material substantially completely by the excavators, the bottom of the hold is provided with inclined parts 42.

The disclosed vessel has the following advantages:

— The way of discharging is not unfavourable for the environment. The spreading of dust can be avoided entirely.

— The degree of utilization of the hold is rather high.

— The bottom of the hold is also the bottom of the vessel so that no expensive support constructions between both bottoms are necessary.

— The central longitudinal conveyor has a high position so that there is space for the transfer to the discharge conveyor. In addition this longitudinal conveyor may keep the same level along its entire length.

— The hold can be discharged along the whole width so there is no risk for a list of the vessel.

— If the load consists of different layers, the way of digging in the vertical direction will lead to a good mixture.

— The excavators, the longitudinal conveyor and the elevating conveyor are well accessible for machinists so that eventual failures can be re-— medied in a short time.

Within the scope of the claims many modifications of the disclosed self-unloading vessel are possible. For instance only one excavator could be suspended from the bridge construction in which case the longitudinal conveyor 1 is mounted adjacent one side of the vessel. The excavating width of this single excavator could correspond with the width of the hold, however, it can also be less in which case the excavator should be movable in the transverse direction along the bridge construction. It is preferred that the excavating width of the excavator is at least half the width of the hold. Further it is possible that the transverse chain conveyor 26 is replaced by inclined bottom plates on which the material, discharged by the excavator buckets, slides to the longitudinal conveyor 1. Instead of buckets excavators also other constructions are possible which may move the material from the bottom the holds upwards and may discharge the material. In order to be able to remove the bulk material from the hold in horizontal layers, the excavating construction could be adjustable in the vertical direction.

## Claims

1. A self-unloading vessel for bulk cargo comprising a deck (40) over the cargo storing hold, said deck (40) having hatchways to be closed by covers (39), a conveyor (1) extending in the longitudinal direction of the vessel, a bridge (15) movable on rails (17) in the longitudinal direction of the vessel, at least one excavator (13, 14) suspended from said bridge, and a transverse gutter conveyor (25a, 25b, 26) mounted to said bridge to lead the excavated bulk material to the longitudinal conveyor (1), said bridge (15) with excavator as well as said longitudinal conveyor (1) being entirely supported underneath said deck (40), characterized in, that the longitudinal conveyor (1) has been mounted on a support (2) at such a level that it takes a position in the upper part of the hold and that the bridge (15) is mounted at a short distance below the deck (40).

2. Self-unloading vessel according to claim 1, characterized in, that the longitudinal conveyor (1) is mounted on a partition wall (2) approximately in the middle of the hold between two excavators (13, 14) suspended from the common bridge (15).

3. Self-unloading vessel according to claim 2, characterized in, that the transverse conveyor for both excavators (13, 14) is one single chain conveyor (26) having carriers, the upper part of said chain conveyor at the location of one excavator lying immediately above a gutter bottom (25a), whereas said upper part at the location of the other excavator lets the bulk material pass to a gutter bottom (25b) above which the lower part of the chain conveyor runs.

**Patentansprüche**

1. Schiff mit eigenen Entladungsvorrichtungen für gestürzte Ladung, mit einem, Deck (40) über dem die Ladung aufnehmenden Laderaum, wobei das Deck (40) mit Abdeckungen (39) schliessbare Schiffluken aufweist, einem sich in Längsrichtung des Schiffes erstreckenden Förderer (1), einer auf Schienen (17) in Längsrichtung des Schiffes bewegbare Brücke (15), mindestens einem von dieser Brucke hängenden Bagger (13, 14) und einem auf dieser Brücke befestigten und sich in Querrichtung erstreckende Rinnenförderer (25a, 25b, 26) zum Leiten des ausgebaggerten Schüttgutes zu dem sich in Längsrichtung erstreckenden Förderer (1), wobei diese Brücke (15) samt Bagger wie auch dieser sich in Längsrichtung erstreckende Förderer (1) vollständig unterhalb dieses Decks (40) abgestützt sind, dadurch gekennzeichnet, dass der sich in Längsrichtung erstreckende Förderer (1) auf einer Abstützung (2) auf solcher Höhe befestigt ist, dass er im oberen Teil des Laderaumes zu liegen kommt, und dass die Brücke 15 unter dem Deck (40) in geringem Abstand davon befestigt ist.

2. Schiff mit eigenen Entladungsvorrichtungen nach Anspruch 1, dadurch gekennzeichnet, dass der sich in Längsrichtung erstreckende Förderer (1) an einer Trennwand (2) ungefähr in der Mitte des Laderaumes zwischen den beiden von der gemeinsamen Brücke (15) hängenden Baggern (13, 14) befestigt ist.

3. Schiff mit eigenen Entladungsvorrichtungen nach Anspruch 2, dadurch gekennzeichnet, dass der sich in Querrrichtung erstreckende Förderer für beide Bagger (13, 14) ein Einzelkettenförderer (26) mit Förderelementen ist, wobei der obere Teil dieses Kettenförderers an der Stelle eines der Bagger direkt oberhalb eines Rinnenbodens (25a) liegt, während der obere Teil an der Stelle des anderen Baggers das Schüttgut zu einem Rinnenboden (25b) passieren lässt, über welchen der untere Teil des Kettenförderers laüft.

**Revendications**

1. Navire autodéchargeur pour cargaison en vrac, comprenant un tablier (40) au-dessus de la cale de stockage de la cargaison, ledit tablier (40) comportant des écoutilles pouvant être fermées par des couvercles (39), un convoyeur (1) s'étendant dans la direction longitudinale du navire, un pont-roulant (15) mobile sur des rails (17) dans la direction longitudinale du navire, au moins un excavateur (13, 14) suspendu audit pont-roulant, et un convoyeur de rigole transversale (25a, 25b, 26) fixé audit pont-roulant pour amener la matière en vrac prise par l'excavateur jusqu'au convoyeur longitudinal (1), ledit pont-poulant (15) avec l'excavateur ainsi que ledit convoyeur (1) étant complètement supportés en-dessous dudit tablier (40), caractérisé en ce que le convoyeur longitudinal (1) est fixé sur un support (2) à un niveau tel qu'il occupe une position située dans la partie supérieure de la cale et que le pont-roulant (15) est fixé en dessous du tablier (40) à une courte distance de celui-ci.

2. Navire autodéchargeur selon la revendication 1, caractérise en ce que le convoyeur longitudinal (1) est fixé sur une paroi de séparation (2) approximativement au milieu de la cale entre les deux excavateurs (13, 14) suspendus au pont-roulant commun (15).

3. Navire autodéchargeur selon la revendication 2, caractérisé en ce que le convoyeur transversal relatif aux deux excavateurs (13, 14) est un convoyeur à chaîne unique (26) comportant des entraîneurs, la partie supérieure dudit convoyeur à chaîne étant, à l'emplacement de l'un des excavateurs, située immédiatement au-dessus d'un fond de rigole (25a), tandis que ladite partie supérieure, à l'emplacement de l'autre excavateur, laisse passer, la matière en vrac vers un fond de rigole (25b) au-dessus duquel court la partie inférieure de convoyeur à chaîne.

Fig-1

Fig-2

Fig-3

# fig-4